# EUROPEAN PATENT APPLICATION

(11) **EP 4 635 754 A1**
(43) Date of publication of application: **22.10.2025**
(21) Application number: 24170955.9
(22) Date of filing: 18.04.2024
(51) Int. Cl.: B60C 11/03

(54) **TIRE WITH AN IMPROVED TREAD PATTERN**

(71) Applicant: Bridgestone Europe NV/SA, 1930 Zaventem (BE)
(72) Inventor: TOSCANO, Marco, 00128 Rome (IT)
(74) Representative: Bardehle Pagenberg Partnerschaft mbB Patentanwälte Rechtsanwälte

(57) **Abstract**

A tire for a vehicle comprising a tread is provided. The tread comprises a set of consecutive blocks (10) arranged along a circumference of the tire and a plurality of grooves (14) arranged over the circumference of the tire. Each of the plurality of grooves is arranged between two blocks of the set of consecutive blocks and each of the plurality of grooves comprises a first portion having first groove edges that are arranged substantially parallel to each other, and a second portion having second groove edges that are arranged unparallel to each other.

## Description

### Field of the disclosure

The present invention relates to a vehicle tire. One possible application of the disclosed tire relates to a winter tire intended to equip a commercial van vehicle or a light truck. The disclosure can also be applied to other tires, for example all-season tires or tires for off road applications.

### Background

Snow- and ice-covered road surfaces bear several challenges for the grip of tires thereon due to the decreased friction between the tire and the road surface. This may cause difficulties in breaking and accelerating of a car, since tire grip is essential for those processes. Moreover, a vehicle's steering capability may be impaired by ice and or snow for similar reasons.

Furthermore, temperatures in winter are often lower than in summer, in some regions to the extent of some tens of degrees below o°C in winter. As temperatures drop, close to the point where the glass transition temperature of the tire's rubber is approached, the rubber becomes stiffer, further impairing the tire's breaking, accelerating and steering capability.

From the prior art, several tires are known which deal with winter conditions by providing a more flexible rubber material, material having a lower glass transition temperature, or more flexible tread patterns to overcome the above-identified problems.

However, such tires have worse wear conditions than comparable summer tires, meaning that the tread profile wears off faster than when using harder material or less flexible tread patterns.

Therefore, it is an object of the present invention to provide a tire that provides good driving properties on snow- and ice-covered road surfaces while also providing long durability.

### Summary of the invention

This object is achieved by providing an improved vehicle tire according to the independent claim. Further embodiments are described in the dependent claims.

According to aspects of the invention, a tire for a vehicle comprising a tread is provided. The tread comprises a set of consecutive blocks arranged along a circumference of the tire and a plurality of grooves arranged over the circumference of the tire. Each of the plurality of grooves is arranged between two blocks of the set of consecutive blocks and each of the plurality of grooves comprises a first portion having first groove edges that are arranged substantially parallel to each other, and a second portion having second groove edges that are arranged unparallel to each other.

Such a tire provides a good tradeoff between improving traction on snow, particularly improving the steering capability of the tire, while also providing good durability. This is particularly achieved by providing two portions of each groove, wherein one portion has substantially parallel edges and one portion has unparallel edges. The portion with the unparallel edges provides for two edges that show a different angle of inclination with respect to the equatorial plane of the tire (i.e., the plane that passes through the center of the tread and which is perpendicular to the tire's axis of rotation).

In some embodiments, in the first portion (i.e., the portion having substantially parallel edges), the difference of the angle of inclination of two respective edges forming a groove with respect to the equatorial plane is below 1°, and wherein in the second portion (i.e., the portion having edges that are arranged unparallel to each other) the difference of the angle of inclination of two respective edges forming a groove with respect to the equatorial plane is above 1°, preferably between 2° and 8°, more preferably between 3° and 5°, even more preferably by between 3.5° and 4.5°.

Since edges are generally used to provide increased friction between the tread and the ground, the different directions of the edges allow for traction in multiple directions, thus increasing the overall stability of the tire, especially during the above-identified critical operations such as breaking, accelerating and steering. At the same time, the groove portion having substantially parallel edges provides well for the tire's capability of transporting water, especially for transporting water from the center to the sides of the tire's contact patch.

Thus, the proposed tread pattern allows for the enhanced driving properties under winter conditions by means of the unparallel edges without the need for a specifically flexible tire pattern. Consequently, by means of the present invention, the durability of the tire can also be increased by providing a stiffer tire pattern that still has good driving properties under winter conditions.

### Brief description of the Figures

Fig. 1 shows a sketch of a vehicle tire according to the present disclosure.
Fig. 2 illustrates a flat image of a full tread pattern of a tire according to the present disclosure.
Fig. 3 illustrates an exemplary groove between two consecutive blocks according to the present disclosure.
Fig. 4 illustrates another exemplary groove between two consecutive blocks according to the present disclosure.
Fig. 5 illustrates an exemplary embodiment showing an intersection between a groove of the first set of grooves and a groove of the second set of grooves.

### Detailed Description

To overcome the disadvantages of the prior art as discussed above, the invention aims at providing a plurality of grooves arranged between a plurality of consecutive blocks which have one portion having substantially parallel edges and one portion having unparallel edges. Edges in general provide for traction between the tire and the road, especially on snow-covered road surfaces, because an edge may for example dig into the snow and may thus increase the friction force which is orthogonal to the edge. If the friction force is, however, parallel to the edge, the edge itself does not contribute to the friction force. By providing a portion with unparallel edges, it is ensured that if the friction force is parallel to one of the edges, there is always another edge which is inclined with respect to the friction force, thus improving the traction of the tire, especially during lateral stress, e.g., during steering and for lateral road holding, but also during breaking and accelerating. In this regard, tests have shown that even small differences in the inclination angles of two edges forming a groove, such as differences in the range between 1° and 10°, enable the improvement of the traction of the tire.

In some embodiments, the plurality of grooves may comprise two unparallel portions and one substantially parallel portion, wherein one unparallel portion is located axially inwardly with respect to the substantially parallel portion and the other unparallel portion is located axially outwardly with respect to the substantially parallel portion. Preferably, the plurality of grooves comprises on both sides of the tires grooves that extend from a respective shoulder region of the tire beyond the equatorial plane of the tire, in at least a part thereof transverse to the circumferential direction. The grooves from one side may extent into the grooves from the other side, as will be shown in more detail below. Thus, for such a configuration, each side of the tire comprises a set of grooves, wherein each groove of the set of grooves comprises the aforementioned two unparallel portions and one substantially parallel portion, wherein one unparallel portion is located axially inwardly with respect to the substantially parallel portion and the other unparallel portion is located axially outwardly with respect to the substantially parallel portion.

This arrangement may ensure that the above-described effect occurs especially in the region of tire tread bound to assure vehicle maneuverability. Typically, handling is strongly related to the design of the area near the equatorial plane, since this part is essential especially for providing stability during steering. The axially more outward parts are more important for acceleration and breaking.

As discussed briefly above, this also allows for a stiffer tread pattern, meaning that similar traction properties can be reached by providing unparallel edges without the need for a specifically flexible tire pattern. Therefore, durability of the tire can be improved without impairing the traction properties.

The portion having parallel edges provides for a channel in the tread pattern which allows for a very effective ejection of water from the contact patch of the tire. The parallel edges provide for a constant cross-sectional width of the so-formed water channel, which provides for optimal water draining capability, thus ensuring that the tire also performs well on wet road surfaces.

Consequently, the tire according to the present disclosure provides for an improved tradeoff between grip on snowy and wet ground, as well as tire durability.

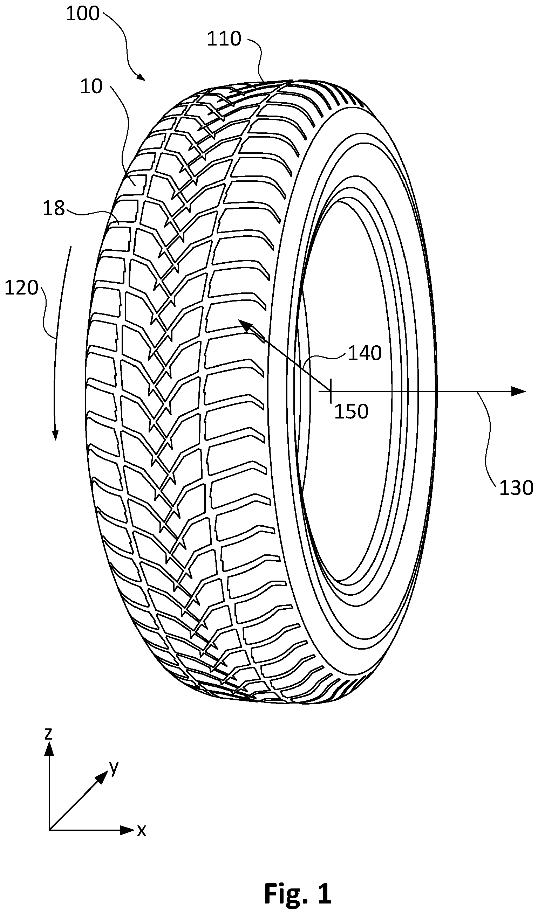

Fig. 1 shows a sketch of a vehicle tire according to the present disclosure.

According to Fig. 1, the tire 100 comprises a tread 110. The tread comprises a set of consecutive blocks 10 as well as a plurality of grooves 18, each groove 18 arranged between two blocks 10 of the set of consecutive blocks. Moreover, one or more sipes may be arranged within each of the set of consecutive blocks 10.

The blocks may be arranged consecutively along a circumferential direction 120 of the tire.

Within the context of the present disclosure, "circumferential direction" 120 means a direction perpendicular to an axial direction 130 which is parallel to the direction in which the tire usually rolls, i.e., parallel to a tangential direction with respect to the circumference of the tire. With respect to Fig. 1, the circumferential direction 120 is thus a direction which is within a plane parallel to the yz-plane.

Within the context of the present disclosure, "axial direction" 130 means a direction parallel to the direction of an axis of a vehicle on which the tire is usually mounted. Thus, according to Fig. 1, the axial direction 130 is parallel to the x-axis and therefore perpendicular to the yz-plane.

Within the context of the present disclosure, "radial direction" 140 means a direction perpendicular to the axial direction. The radial direction is parallel to a connection line of a center 150 of the tire with the tread surface. Thus, the radial direction is within a plane parallel to the yz-plane and generally perpendicular to both the axial direction 130 and the circumferential direction 120.

Within the context of the present disclosure, the "equatorial plane" refers to a plane which is perpendicular to the axial direction 130 and cuts the section width of the tire in two halves of equal width. Thus, the equatorial plane is parallel to the yz-plane and corresponds to the widthwise centerline of the tread.

Any numeral angles given herein are to be considered absolute values, i.e., not limiting to the orientation of the respective angle.

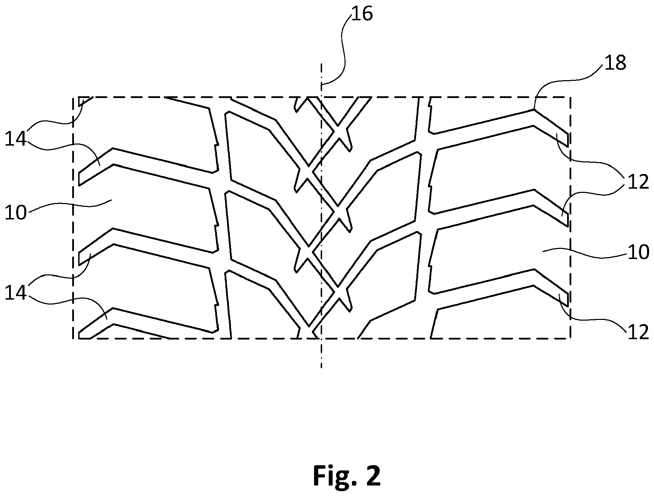

Fig. 2 illustrates a flat image of a full tread pattern of a tire according to an exemplary embodiment of the present disclosure. The tread pattern of Fig. 2 may for example be placed on the tire of Fig. 1.

According to Fig. 2, the tread of the tire may comprise a set of consecutive blocks 10 arranged along a circumference of the tire.

In some embodiments the tread may comprise blocks on both sides of the equatorial plane 16 of the tire. In some embodiments described elsewhere herein, these blocks may have axisymmetric configuration, such that the overall pattern is V-Shaped. In other embodiments described elsewhere herein, the blocks on both sides of the equatorial plane may be point-symmetric, such that the overall pattern is S-shaped. In any case, the present disclosure is not directed at a specific orientation of the blocks but can be applied to blocks of various shapes and orientations.

Moreover, while the present disclosure is described with respect to tread patterns which are generally symmetric, i.e., having same or similar tread configuration on both sides of the equatorial plane, it will be understood that the concept described herein can also be applied in asymmetric tread patterns, i.e., in patterns have substantially different tread configurations on both sides of the equatorial plane of the tire.

Generally, the blocks 10 have the purpose of providing contact to the ground when the tire is in rolling condition. The edges as well as the surfaces of the blocks are configured to provide a friction force between the tire and the ground for grip, allowing general roadholding as well as movement control of the vehicle by a driver of a vehicle by acceleration, breaking or steering.

According to Fig. 2, the tread may further comprise a plurality of grooves 18 arranged over the circumference of the tire. Each of the plurality of grooves may be arranged between two blocks of the set of consecutive blocks.

"Consecutive blocks" within the context of this disclosure means that the tread comprises multiple blocks following one another in succession over the circumference of the tire. While it is preferred that the invention according to the present disclosure is provided for all grooves of the tire, it is possible that some individual grooves, which may be arranged between other grooves of the plurality of grooves, are not arranged as described herein.

Preferably, the grooves 18 may start near the equatorial plane 16 of the tire and extend towards a shoulder end of the tread to open at the outer edge of the tire. Each groove 18 is generally delimited by two adjacent blocks 10, and more precisely by the two adjacent blocks' respective edges facing towards the groove.

The purpose of the grooves 18 is mainly the drainage of water from the contact patch by guiding the water along the groove 18 towards the shoulder of the tire and eject the water from there, as the tire rolls on the ground. Thus, the grooves 18 provide for improved performance of the tire, especially in wet road conditions. Further, as the grooves delimit the consecutive blocks, they also provide edges for the blocks for improved snow performance. Moreover, the grooves allow for improved wear performance, as they allow more flexibility of the tread elements, such that slippage of the blocks over the ground is reduced, leading to a decrease in the abrasion effects leading to wear.

In some aspects of the present disclosure, the plurality of grooves may comprise a first set of grooves 12 extending substantially on one side of the equatorial plane 16 of the tire and a second set of grooves 14 extending substantially on the other side of the equatorial plane 16 of the tire. As has already been described above and can be seen form Fig. 2, a groove from the first set of grooves 12 may reach into a groove from the second set of grooves 14. More particularly, a single groove from the set of grooves 12 may reach into or cross two grooves from the set of grooves 14, and vice versa.

In some aspects of the present disclosure, the tread may have a V-shaped directional pattern.

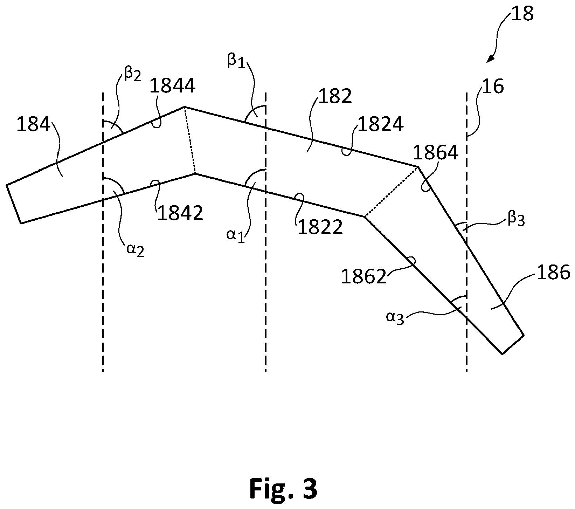

Fig. 3 illustrates an exemplary groove between two consecutive blocks according to the present disclosure. For example, the groove depicted in Fig. 3 may be one of the grooves 18 as illustrated in Fig. 2.

As illustrated in Fig. 3, the groove 18 comprises a first portion 182 having first groove edges 1822, 1824 that are arranged substantially parallel to each other. For example, an angle between the first groove edges 1822, 1824 in the first portion 182 may be below 1°. For example, the edge 1822 may be inclined with respect to the equatorial plane 16 of the tire by α₁ and the edge 1824 may be inclined with respect to the equatorial plane 16 of the tire by β₁. Then, in some aspects of the present disclosure, the expression |α₁ - β₁| < 1° maybe fulfilled.

As regards the absolute value of the angle of inclination of the two edges 1822, 1824 with respect to the equatorial plane, different preferred configurations are possible. For each of the following configurations, the afore-mentioned criterion according to which the two first groove edges 1822, 1824 are parallel to each other, as, for example, expressed by |α₁ - β₁| < 1°, remains applicable.

In some aspects of the present disclosure, the first groove edges 1822, 1824 in the first portion 182 may be inclined between 70° and 80° with respect to an equatorial plane of the tire. For example, the expression 80° ≥ *α*₁ ≥ 70° may be fulfilled, and/or the expression 80° ≥ β₁ ≥ 70° may be fulfilled.

In some aspects of the present disclosure, the first groove edges 1822, 1824 in the first portion 182 may be inclined between 72° and 78° with respect to an equatorial plane of the tire. For example, the expression 78° ≥ *α*₁ ≥ 72° may be fulfilled, and/or the expression 78° ≥ β₁ ≥ 72° may be fulfilled.

In some aspects of the present disclosure, the first groove edges 1822, 1824 in the first portion 182 may be inclined between 74° and 78° with respect to an equatorial plane of the tire. For example, the expression 78° ≥ *α*₁ ≥ 74° may be fulfilled, and/or the expression 78° ≥ β₁ ≥ 74° may be fulfilled.

In some aspects of the present disclosure, the first groove edges 1822, 1824 in the first portion 182 may be inclined between 76° and 77° with respect to an equatorial plane of the tire. For example, the expression 77° ≥ *α*₁ ≥ 76° may be fulfilled, and/or the expression 77° ≥ β₁ ≥ 76° may be fulfilled.

These inclination angles provide for lower abrasion, since due to the large inclination angle, different parts of each tread block come into contact with the road surface at almost the same time. This leads to a more even distribution of friction forces in the circumferential direction of the tire over the entire surface of each block. Consequently, the durability of the tire can be increased.

In other aspects of the present disclosure, the first groove edges 1822, 1824 in the first portion 182 may be less steeply inclined with respect to the equatorial plane, i.e., have a lower angle of inclination with respect to the equatorial plane than the exemplary configuration discussed before. Still, the criterion according to which the two first groove edges 1822, 1824 are parallel to each other, as, for example, expressed by |α₁ - β₁| < 1°, remains applicable. For example, in some aspects of the present disclosure, the first groove edges 1822, 1824 in the first portion 182 may be inclined between 60° and 70° with respect to an equatorial plane of the tire. For example, the expression 70° ≥ *α*₁ ≥ 60° may be fulfilled, and/or the expression 70° ≥ β₁ ≥ 60° may be fulfilled.

In some aspects of the present disclosure, the first groove edges 1822, 1824 in the first portion 182 may be inclined between 62° and 69° with respect to an equatorial plane of the tire. For example, the expression 69° ≥ *α*₁ ≥ 62° may be fulfilled, and/or the expression 69° ≥ β₁ ≥ 62° may be fulfilled.

In some aspects of the present disclosure, the first groove edges 1822, 1824 in the first portion 182 may be inclined between 63° and 68° with respect to an equatorial plane of the tire. For example, the expression 68° ≥ *α*₁ ≥ 63° may be fulfilled, and/or the expression 68° ≥ β₁ ≥ 63° may be fulfilled.

In some aspects of the present disclosure, the first groove edges 1822, 1824 in the first portion 182 may be inclined between 65° and 67° with respect to an equatorial plane of the tire. For example, the expression 67° ≥ *α*₁ ≥ 65° may be fulfilled, and/or the expression 67° ≥ β₁ ≥ 65° may be fulfilled.

These lower angles provide for improved steering response, by providing less inclined edges which provide for friction forces contributing to the tire traction during steering.

As further illustrated in Fig. 3, the groove 18 comprises a second portion 184 having second groove edges 1842, 1844 that are arranged unparallel to each other. For example, the angle between the second groove edges 1842, 1844 in the second portion 184 may be equal to or above 1°. For example, the edge 1842 may be inclined with respect to the equatorial plane 16 of the tire by α₂ and the edge 1844 may be inclined with respect to the equatorial plane 16 of the tire by β₂. Then, in some aspects of the present disclosure, the expression |α₂ - β₂| ≥ 1° maybe fulfilled.

In some aspects of the present disclosure, the second portion 184 may be arranged axially outward with respect to the first portion 182. Preferably, in this configuration, a width of the groove 18 in the second portion 184 may narrow towards the shoulder of the tire.

In some aspects of the present disclosure, an inclination angle of the second groove edges 1842, 1844 with respect to the equatorial plane 16 of the tire in the second portion 184 may differ by between 1° and 10°. For example, the expression 10° ≥ |α₂ - β₂| ≥ 1° may be fulfilled.

In some aspects of the present disclosure, an inclination angle of the second groove edges 1842, 1844 with respect to the equatorial plane 16 of the tire in the second portion 184 may differ by between 2° and 8°. For example, the expression 8° ≥ |α₂ - β₂| ≥ 2° maybe fulfilled.

In some aspects of the present disclosure, an inclination angle of the second groove edges 1842, 1844 with respect to the equatorial plane 16 of the tire in the second portion 184 may differ by between 3° and 5°. For example, the expression 5° ≥ |α₂ - β₂| ≥ 3° maybe fulfilled.

In some aspects of the present disclosure, an inclination angle of the second groove edges 1842, 1844 with respect to the equatorial plane 16 of the tire in the second portion 184 may differ by between 3.5° and 4.5°. For example, the expression 4.5° ≥ |α₂ - β₂| ≥ 3.5° maybe fulfilled.

As regards the absolute value of the angle of inclination of the two second groove edges 1842, 1844 with respect to the equatorial plane, different preferred configurations are possible. For each of the following configurations, at least one of the afore-mentioned criteria according to which the two groove edges 1842, 1844 are unparallel to each other, as, for example, expressed by any of the equations above (|α₂ - β₂| ≥ 1°, including 10° ≥ |α₂ - β₂| ≥ 1° , ..., 4.5° ≥ |α₂ - β₂| ≥ 3.5°) remains applicable.

In some aspects of the present disclosure, an inclination angle of at least one of the second groove edges 1842, 1844 with respect to an equatorial plane 16 of the tire in the second portion 184 may be between 50° and 65°. For example, the expression 65° ≥ α₂ ≥ 50° may be fulfilled, and/or the expression 65° ≥ β₂ ≥ 50° may be fulfilled.

In some aspects of the present disclosure, an inclination angle of at least one of the second groove edges 1842, 1844 with respect to an equatorial plane 16 of the tire in the second portion 184 may be between 52° and 62°. For example, the expression 62° ≥ *α*₂ ≥ 52° may be fulfilled, and/or the expression 62° ≥ β₂ ≥ 52° may be fulfilled.

In some aspects of the present disclosure, an inclination angle of at least one of the second groove edges 1842, 1844 with respect to an equatorial plane 16 of the tire in the second portion 184 may be between 54° and 60°. For example, the expression 60° ≥ *α*₂ ≥ 54° may be fulfilled, and/or the expression 60° ≥ β₂ ≥ 54° may be fulfilled.

In some aspects of the present disclosure, an inclination angle of at least one of the second groove edges 1842, 1844 with respect to an equatorial plane 16 of the tire in the second portion 184 may be between 55° and 59°. For example, the expression 59° ≥ *α*₂ ≥ 55° may be fulfilled, and/or the expression 59° ≥ β₂ ≥ 55° may be fulfilled.

Inclination angles of the groove edges in the above-described ranges provide for optimal performance in view of the above-described advantages. In other words, providing the angle variation in the second portion in the above-described manner allows for improved traction of the tire on snow- and ice-covered grounds, especially during critical maneuvers such as steering, breaking and accelerating. At the same time, the durability of the tire may be improved.

In some aspects of the present disclosure, the second portion 184 may be arranged at least partially outside of a contact patch of the tire. For example, at least a part of the second groove edges 1842, 1844 that are arranged unparallel to each other may be arranged axially outward of a footprint of the tire. For example, part of the second groove edges 1842, 1844 in the second portion 184 may not be in contact with the road during normal driving conditions due to the convex shape of the tread surface. In this example, the second portion 184 provides for improved traction on snow-covered roads, because while the second portion 184 may not be in contact with the road itself, it may be in contact with the snow covering the road. Because the snow is compressed less in these portions outside of the contact patch, the additional edges can have even more effect towards the improved traction. As regards the unparallel edges, the benefits are similar as described in the summary above.

In other words, the unparallel edges behave according to a similar working principle as spikes of a traditional snow chains.

In some aspects of the present disclosure, the groove 18 may further comprise a third portion 186 having third groove edges 1862, 1864 that are arranged unparallel to each other. For example, the angle between the third groove edges 1862, 1864 in the third portion 186 may be above 1°. For example, the edge 1862 may be inclined with respect to the equatorial plane 16 of the tire by α₃ and the edge 1864 may be inclined with respect to the equatorial plane 16 of the tire by β₃. Then, in some aspects of the present disclosure, the expression |α₃ - β₃| ≥ 1° maybe fulfilled.

In some aspects of the present disclosure, the third portion 186 may be arranged axially inwardly with respect to the first portion 182. Thus, the first portion 182 may be arranged in between the second portion 184 and the third portion 186.

In some aspects of the present disclosure, an inclination angle of the third groove edges 1862, 1864 with respect to the equatorial plane 16 of the tire in the third portion 186 may differ by between 1° and 5°. For example, the expression 5° ≥ |α₃ - β₃| ≥ 1° may be fulfilled.

In some aspects of the present disclosure, an inclination angle of the third groove edges 1862, 1864 with respect to the equatorial plane 16 of the tire in the third portion 186 may differ by between 1.5° and 4°. For example, the expression 4° ≥ |α₃ - β₃| ≥ 1.5° may be fulfilled.

In some aspects of the present disclosure, an inclination angle of the third groove edges 1862, 1864 with respect to the equatorial plane 16 of the tire in the third portion 186 may differ by between 1.5° and 3°. For example, the expression 3° ≥ |α₃ - β₃| ≥ 1.5° may be fulfilled.

In some aspects of the present disclosure, an inclination angle of the third groove edges 1862, 1864 with respect to the equatorial plane 16 of the tire in the third portion 186 may differ by between 2° and 3°. For example, the expression 3° ≥ |α₃ - β₃| ≥ 2° may be fulfilled.

Thus, as can be seen, it is preferred that the difference of inclination angles of the third groove edges 1862, 1864 is slightly smaller than the difference of inclination angels of the second groove edges 1842, 1844. The slightly smaller difference of inclination angles of the third groove edges 1862, 1864 which are close to the equatorial plane of the tire provides for improved water ejection properties through the respective groove. The larger difference of inclination angles of the second groove edges 1842, 1844 provides for an enhanced capability of trapping snow. Since water ejection is not critical in the outer shoulder regions of the tire, the higher difference in inclination angle of the second groove edges 1842, 1844 does not significantly impair the water discharge capacity of the tread profile. The above-described ranges thus provide for optimal trade-off between snow-trapping and water discharging capability.

As regards the absolute value of the angle of inclination of the two third groove edges 1862, 1864 with respect to the equatorial plane, again different preferred configurations are possible. For each of the following configurations, at least one of the afore-mentioned criteria according to which the two groove edges 1862, 1864 are unparallel to each other, as, for example, expressed by any of the equations above (|α₃ - β₃| ≥ 1°, including 5° ≥ |α₃ - β₃| ≥ 1°,..., 3° ≥ |α₃ - β₃| ≥ 2° ) remains applicable.

In some aspects of the present disclosure, an inclination angle of at least one of the third groove edges 1862, 1864 with respect to the equatorial plane 16 of the tire in the third portion 186 may be between 30° and 45°. For example, the expression 45° ≥ *α*₃ ≥ 30° may be fulfilled, and/or the expression 45° ≥ β₃ ≥ 30° may be fulfilled.

In some aspects of the present disclosure, an inclination angle of at least one of the third groove edges 1862, 1864 with respect to the equatorial plane 16 of the tire in the third portion 186 may be between 32° and 42°. For example, the expression 42° ≥ *α*₃ ≥ 32° may be fulfilled, and/or the expression 42° ≥ β₃ ≥ 32° may be fulfilled.

In some aspects of the present disclosure, an inclination angle of at least one of the third groove edges 1862, 1864 with respect to the equatorial plane 16 of the tire in the third portion 186 may be between 35° and 40°. For example, the expression 40° ≥ *α*₃ ≥ 35° may be fulfilled, and/or the expression 40° ≥ β₃ ≥ 35° may be fulfilled.

In some aspects of the present disclosure, an inclination angle of at least one of the third groove edges 1862, 1864 with respect to the equatorial plane 16 of the tire in the third portion 186 may be between 36° and 39°. For example, the expression 39° ≥ *α*₃ ≥ 36° may be fulfilled, and/or the expression 39° ≥ β₃ ≥ 36° may be fulfilled.

Inclination angles of the groove edges in the above-described ranges provide for optimal performance in view of the above-described advantages. In other words, providing the angle variation in the second portion in the above-described manner allows for improved traction of the tire on snow- and ice-covered grounds, especially during critical maneuvers such as steering, breaking and accelerating. At the same time, the durability of the tire may be improved.

In some aspects of the present disclosure, the groove 18 may have an initial end located substantially at an equatorial plane of the tire.

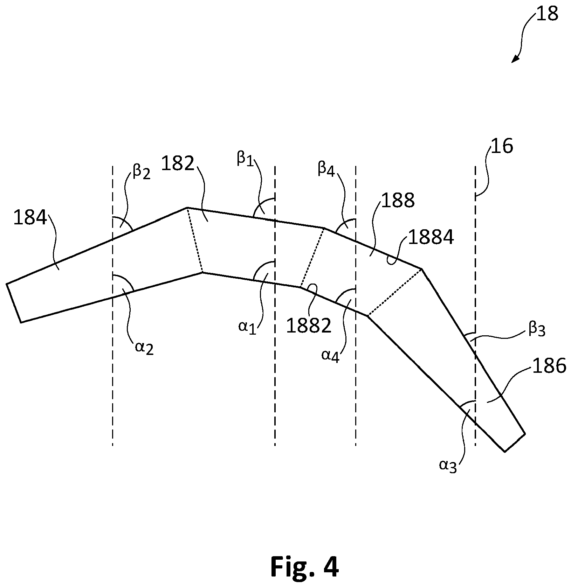

Fig. 4 illustrates another exemplary groove between two consecutive blocks according to the present disclosure.

Fig. 4 represents a similar groove as is represented in Figure 3. In contrast to Fig. 3, the groove of Fig. 4 comprises a fourth portion 188 having fourth groove edges 1882, 1884 that are arranged substantially parallel to each other. For example, an angle between the fourth groove edges 1882, 1884 in the fourth portion 188 may be below 1°. For example, the edge 1882 may be inclined with respect to the equatorial plane 16 of the tire by α₄ and the edge 1884 may be inclined with respect to the equatorial plane 16 of the tire by β₄. Then, in some aspects of the present disclosure, the expression |α₄ - β₄| < 1° maybe fulfilled.

In some aspects of the present disclosure, the fourth groove edges 1882, 1884 in the fourth portion 188 may be inclined between 60° and 70° with respect to an equatorial plane of the tire. For example, the expression 70° ≥ *α*₄ ≥ 60° may be fulfilled. In other examples, the expression 70° ≥ β₄ ≥ 60° may be fulfilled.

In some aspects of the present disclosure, the fourth groove edges 1882, 1884 in the fourth portion 188 may be inclined between 62° and 69° with respect to an equatorial plane of the tire. For example, the expression 69° ≥ *α*₄ ≥ 62° may be fulfilled. In other examples, the expression 69° ≥ β₄ ≥ 62° maybe fulfilled.

In some aspects of the present disclosure, the fourth groove edges 1882, 1884 in the fourth portion 188 may be inclined between 63° and 68° with respect to an equatorial plane of the tire. For example, the expression 68° ≥ *α*₄ ≥ 63° may be fulfilled. In other examples, the expression 68° ≥ β₄ ≥ 63° maybe fulfilled.

In some aspects of the present disclosure, the fourth groove edges 1882, 1884 in the fourth portion 188 may be inclined between 65° and 67° with respect to an equatorial plane of the tire. For example, the expression 67° ≥ *α*₄ ≥ 65° may be fulfilled. In other examples, the expression 67° ≥ β₄ ≥ 65° maybe fulfilled.

The first portion 182 according to Fig. 4 may correspond to the first portion 182 according to Fig. 3. Thus, the absolute values for the angle of inclination with respect to the equatorial plane for the first groove edges 1822, 1824, as well as the relative difference between the two first groove edges 1822, 1824 may be as described above with respect to the first portion 182 of Fig. 3.

In some aspects, the inclination angles α₄, β₄ of the fourth portion 188 may be smaller than the inclination angles α₁, β₁ of the first portion 182. As described elsewhere herein, smaller inclination angles provide for improved steering behavior of the tire, while greater inclination angles provide for improved tire durability. By combining two portions with different inclination angles, both advantages can be achieved.

As illustrated in Fig. 4, the fourth portion 188 may be arranged axially inwardly with respect to the first portion 182. However, in other examples, the fourth portion 188 may be arranged axially outwardly with respect to the first portion 182.

In some aspects, the fourth portion 188 may be arranged between the first portion and the third portion. In other aspects, the fourth portion 188 may be arranged between the first portion 182 and the second portion 184.

The second portion 184 and the third portion 186 may correspond to the second portion 184 and the third portion 186 as described according to Fig. 3. Thus, the absolute values for the angle of inclination with respect to the equatorial plane for the second groove edges 1842, 1844, as well as the relative difference between the two second groove edges 1842, 1844 may be as described above with respect to the second portion 184 of Fig. 3. Correspondingly, the absolute values for the angle of inclination with respect to the equatorial plane for the third groove edges 1862, 1864, as well as the relative difference between the two third groove edges 1862, 1864 may be as described above with respect to the third portion 186 of Fig. 3.

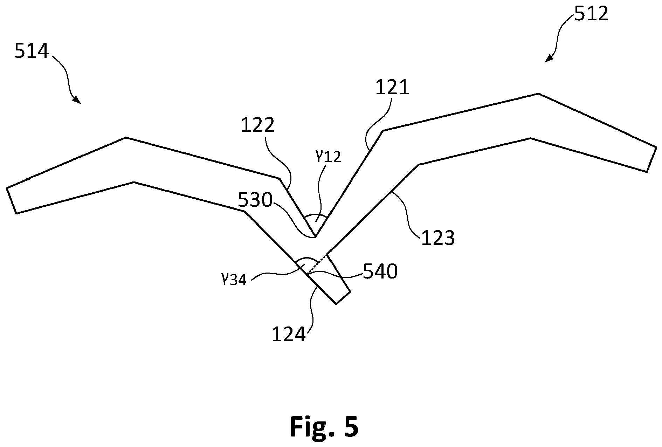

Fig. 5 illustrates an exemplary embodiment showing an intersection between a groove 512 of the first set of grooves 12 and a groove 514 of the second set of grooves 14. The first groove 512 and the second groove 514 may correspond to the grooves described above, for example the grooves illustrated in Figure 3 or Figure 4.

According to Fig. 5, each groove 512 of the first set of grooves 12 may be arranged to intersect a groove 514 of the second set of grooves 14 at the second portion, to form a first point of intersection 530 between a first edge 121 of the groove 512 of the first set of grooves 12 and a second edge 122 of the groove 514 of the second set of grooves 14, the first edge 121 and the second edge 122 arranged as leading edge of a first block 10 of the two blocks of the set of consecutive blocks.

In some aspects of the present disclosure, each groove 512 of the first set of grooves 12 may be further arranged to intersect a groove 514 of the second set of grooves 14 at the second portion, to form a second point of intersection 540 between a third edge 123 of the groove 512 of the first set of grooves 12 and a fourth edge 124 of the groove 514 of the second set of grooves 14, the third edge 123 and the fourth edge 124 arranged as trailing edge of a second block 10 of the two blocks of the set of consecutive blocks.

In the context of this disclosure, "leading edge", sometimes also denoted as "traction edge", refers to the edge of the block that, when a longitudinal traction force is applied to the tire reacts mostly to such force. Typically, the "leading edge" is the edge of a block which is of greater length than the lateral edges of the block, and which first encounters the ground as the block of a tire rolling in a preferred rolling direction enters the contact patch of the tire with the ground.

"Trailing edge", sometimes also denoted as "breaking edge", refers to the edge of the block that, when a longitudinal breaking force is applied to the tire reacts mostly to such force. Typically, the "trailing edge" is the edge of the block which is of greater length than the lateral edges of the block, and which is the last edge to lose contact with the ground as the block of the tire rolling in a preferred rolling direction leaves the contact patch of the tire with the ground.

In some aspects of the present disclosure, at the first point of intersection 530, the first edge 121 and the second edge 122 may form a first angle γ_{1,2}, and at the second point of intersection 540, the third edge 123 and the fourth edge 124 may form a second angle γ_{3,4}·

In some aspects of the present disclosure, the first angle γ_{1,2} may be between 65° and 80°. For example, the expression 80° ≥ γ_{1,2} ≥ 65° maybe fulfilled.

In some aspects of the present disclosure, the first angle *γ*_{1,2} may be between 68° and 76°. For example, the expression 76° ≥ *γ*_{1,2} ≥ 68° may be fulfilled.

In some aspects of the present disclosure, the first angle *γ*_{1,2} may be between 70° and 74°For example, the expression 74° ≥ *γ*_{1,2} ≥ 70° may be fulfilled.

In some aspects of the present disclosure, the first angle *γ*_{1,2} may be between 71° and 73°. For example, the expression 73° ≥ *γ*_{1,2} ≥ 71° maybe fulfilled.

In some aspects of the present disclosure, the second angle *γ*_{3,4} may be between 70° and 85°. For example, the expression 85° ≥ *γ*_{3,4} ≥ 70° maybe fulfilled.

In some aspects of the present disclosure, the second angle *γ*_{3,4} may be between 74° and 81°. For example, the expression 81° ≥ *γ*_{3,4} ≥ 74° maybe fulfilled.

In some aspects of the present disclosure, the second angle *γ*_{3,4} may be between 76° and 79°. For example, the expression 79° ≥ *γ*_{3,4} ≥ 76° may be fulfilled.

In some aspects of the present disclosure, the second angle *γ*_{3,4} may be between 77° and 78°. For example, the expression 78° ≥ *γ*_{3,4} ≥ 77° may be fulfilled.

In some aspects of the present disclosure, the first angle *γ*_{1,2} may differ from the second angle *γ*_{3,4} by a value between 2° and 20°. For example, the expression 20° ≥ |γ_{1,2} - γ_{3,4}| ≥ 2° may be fulfilled.

In some aspects of the present disclosure, the first angle *γ*_{1,2} may differ from the second angle *γ*_{3,4} by a value between 3° and 12°. For example, the expression 12° ≥ |*γ*_{1,2} - *γ*_{3,4}| ≥ 3° maybe fulfilled.

In some aspects of the present disclosure, the first angle *γ*_{1,2} may differ from the second angle *γ*_{3,4} by a value between 4° and 7°. For example, the expression 7° ≥ |*γ*_{1,2} - *γ*_{3,4}| ≥ 4° maybe fulfilled.

These intersection angles of the grooves 512 and 514 provide for improved traction of the tire on snow covered roads, especially in view of lateral road holding and steering performance by allowing the edge of the neighboring block to dig into the snow which is covering the road surface.

### List of reference numbers:

- 10: blocks
- 12: first set of grooves
- 14: second set of grooves
- 16: equatorial plane
- 18, 512, 514: grooves
- 100: tire
- 110: tread
- 120: circumferential direction
- 121: first edge
- 122: second edge
- 123: third edge
- 124: fourth edge
- 130: axial direction
- 140: radial direction
- 150: center
- 182: first portion
- 184: second portion
- 186: third portion
- 188: fourth portion
- 530, 540: point of intersection
- 1822, 1824: first groove edges
- 1842, 1844: second groove edges
- 1862, 1864: third groove edges
- 1882, 1884: fourth groove edges

## Claims

1. A tire for a vehicle comprising a tread, the tread comprising:
a set of consecutive blocks arranged along a circumference of the tire;
a plurality of grooves arranged over the circumference of the tire, wherein each of the plurality of grooves is arranged between two blocks of the set of consecutive blocks;
wherein each of the plurality of grooves comprises a first portion having first groove edges that are arranged substantially parallel to each other, and a second portion having second groove edges that are arranged unparallel to each other.

2. The tire of claim 1, wherein a width of the groove in the second portion narrows towards the shoulder of the tire.

3. The tire of any one of the preceding claims, wherein an angle between the first groove edges in the first portion is below 1°, and wherein the angle between the second groove edges in the second portion is above 1°.

4. The tire of any one of the preceding claims, wherein the second portion is arranged axially outward with respect to the first portion.

5. The tire of any one of the preceding claims, wherein at least a part of the second groove edges that are arranged unparallel to each other are arranged axially outward of a footprint of the tire.

6. The tire of any one of the preceding claims, wherein the first groove edges in the first portion are inclined between 70° and 80° with respect to an equatorial plane of the tire, or
wherein the first groove edges in the first portion are inclined between 60° and 70° with respect to an equatorial plane of the tire.

7. The tire of any one of the preceding claims, wherein an inclination angle of the second groove edges with respect to an equatorial plane of the tire in the second portion differs by between 1° and 10°,
preferably by between 2° and 8°,
more preferably by between 3° and 5°,
even more preferably by between 3.5° and 4.5°.

8. The tire of any one of the preceding claims, wherein an inclination angle of at least one of the second groove edges with respect to an equatorial plane of the tire in the second portion is between 50° and 65°,
preferably between 52° and 62°,
more preferably between 54° and 60°,
even more preferably between 55° and 59°.

9. The tire of any one of the preceding claims, wherein each of the plurality of grooves further comprises:
a third portion having third groove edges that are arranged unparallel to each other.

10. The tire of claim 9, wherein the third portion is arranged axially inwardly with respect to the first portion.

11. The tire of any one of claims 9 to 10, wherein a width of the groove in the third portion narrows towards the equatorial plane of the tire.

12. The tire of any one of claims 9 to 11, wherein an inclination angle of the third groove edges with respect to an equatorial plane of the tire in the third portion differs by between 1° and 5°,
preferably by between 1.5° and 4°,
more preferably by between 1.5° and 3°,
even more preferably by between 2° and 3°.

13. The tire of any one of claims 9 to 12, wherein an inclination angle of at least one of the third groove edges with respect to an equatorial plane of the tire in the third portion is between 30° and 45°,
preferably between 32° and 42°,
more preferably between 35° and 40°,
even more preferably between 36° and 39°.

14. The tire of any one of the preceding claims, wherein each of the plurality of grooves has an initial end located substantially at an equatorial plane of the tire.

15. The tire of any one of the preceding claims, wherein the plurality of grooves comprises a first set of grooves extending substantially on one side of an equatorial plane of the tire and a second set of grooves extending substantially on the other side of the equatorial plane of the tire.

16. The tire of claim 14, wherein each groove of the first set of grooves is arranged to intersect a groove of the second set of grooves, to form
- a first point of intersection between a first edge of the groove of the first set of grooves and a second edge of the groove of the second set of grooves, the first and the second edge arranged as leading edge of a first block of the two blocks of the set of consecutive blocks; and
- a second point of intersection between a third edge of the groove of the first set of grooves and a fourth edge of the grove of the second set of grooves, the third and the fourth edge arranged as trailing edge of a second block of the two blocks of the set of consecutive blocks,
- wherein at the first point of intersection, the first edge and the second edge form a first angle, and at the second point of intersection, the third edge and the fourth edge form a second angle.

17. The tire of claim 15, wherein the first angle is between 65° and 80°,
preferably between 68° and 76°,
more preferably between 70° and 74°,
even more preferably between 71° and 73°;
and/or
the second angle is between 70° and 85°,
preferably between 74° and 81°,
more preferably between 76° and 79°,
even more preferably between 77° and 78°.

18. The tire of claim 15 or claim 16, wherein the first angle differs from the second angle by a value between 2° and 20°,
preferably between 3° and 12°, and
more preferably between 4° and 7°.

19. The tire of any one of the preceding claims, wherein the tread has a V-shaped directional pattern.
